(19)

Europäisches
Patentamt
European
Patent Office
Office européen
des brevets

(11)  **EP 3 885 742 A1**

(12) **EUROPEAN PATENT APPLICATION**

(43) Date of publication:
29.09.2021 Bulletin 2021/39

(51) Int Cl.:
*G01N 21/45* (2006.01)       *G01N 21/17* (2006.01)

(21) Application number: **20164895.3**

(22) Date of filing: **23.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fachhochschule Nordwestschweiz 5210 Windisch (CH)**

(72) Inventors:
• **VISSER, Bradley**
  **5408 Ennetbaden (CH)**
• **WEINGARTNER, Ernest**
  **5408 Ennetbaden (CH)**

(74) Representative: **Fischer, Michael**
  **Siemens Schweiz AG**
  **Intellectual Property**
  **Freilagerstrasse 40**
  **8047 Zürich (CH)**

(54) **A SINGLE-BEAM PHOTOTHERMAL INTERFEROMETER FOR IN-SITU MEASUREMENTS OF LIGHT ABSORBING TRACE SUBSTANCES**

(57)  It is the objective of the present invention to provide a PTI system that has an easy set-up and requires only simplified measures for the calibration and alignment of the light beams.

This objective is achieved by a single-beam photothermal interferometer for in-situ measurements of light absorption by a light absorbing trace substance load in a fluid, comprising:

a) a laser source emitting a laser beam; said laser source further being enabled to operate in a modulated mode between two intensity levels;

b) a measurement chamber and a reference light path; said reference light path preferably including at least one reference chamber;

c) a number of focussing and/or reflection elements for the laser beam enabling to split the laser beam into a first beam part and a second beam part and to guide the first beam part through the measurement path and the second beam part along the reference light path;

d) a number of pump and/or filter modules being enabled to flood the measurement path with a first fluid and optionally the at reference light path with a second fluid;

e) a detector comprising at least one detector module to measure the intensity of the first and the second beam part after the measurement path and the reference light path respectively; and

f) an evaluation unit being enabled to determine after interferometric recombination the phase shift among the detected intensities of the first beam part and the second beam part.

This interferometer greatly simplifies the alignment of the interferometer itself, maximises the sensitivity of the measurement and enables artefact free measurement of fluid /aerosol absorption in the presence of absorbing species, such as gaseous molecules, carbonaceous particles (e.g. soot) or the like.

Figure 1

EP 3 885 742 A1

**Description**

The present invention relates to a laser beam photothermal interferometer for the in-situ measurement of light absorbing species, such as soot particles, trace gases, dissolved substances and/or colloidal particles such as microplastics, and metal and semiconducting nanoparticles in a carrier gas or in a fluid.

In principle, such laser photothermal interferometer are known in the art. Measurements of light absorption are commonly used to determine the concentration of, or identify light absorbing species. For the example of soot particles, measurements of light absorption of ambient aerosols are used to determine the mass concentration of soot particles in the ambient air. Light absorption measurements are also commonly used to perform source apportionment of soot particles by examining the wavelength dependence of the light absorption. These measurements are very important as soot particles are both toxic to human health and climate active. Measurements of light absorption are used to directly determine the radiative forcing of these pollutants and their contribution to climate change. Concentration measurements are used to determine and quantify emissions and mitigate human exposure to soot.

An interferometer is a device that uses light to probe the relative optical path length of its arms. The relative optical path length of the arms is a combination of the relative physical length of one arm with the respect to the other and the refractive index of the traversed medium in one arm with respect to the other. A beam of light is split into two parts by a beam splitter, with one beam part traversing the measurement arm of the interferometer and the other the reference arm. Interference patterns are formed by recombining the beams that traverse the measurement and reference arms of the interferometer.

Photothermal interferometry (PTI) is an *in-situ* measurement of light absorption via interferometry. Light absorbed by a dilute sample is transferred to the surrounding fluid in the form of heat, changing the local refractive index of the fluid and leading to a change of the interference pattern. The change of refractive index is then probed using interferometry by measuring the change in light intensity at the detection element.

Current realisations of PTI require two lasers, a modulated high-powered pump laser to deposit energy into the medium via absorption and a second continuous probe laser to read the changes in refractive index. Modulation of the pump beam leads to a modulation of the light absorption and refractive index in the measurement chamber and subsequently the a modulation of the distribution of probe beam intensity in the output beams of the interferometer due to the principle of interference. A two laser PTI is disclosed in the European Patent Application EP 3 492 905 A1.

Two laser interferometers require a very precise alignment of the two laser beams within the measurement chamber - that is the geometry of the pump-probe configuration. This can be cumbersome and any small misalignment reduces the sensitivity of the measurement and thus negatively impacts the lower detection limit of the instrument. A small change in the alignment requires the instrument to be recalibrated using a species of known absorption strength in order to determine the new sensitivity of the instrument. Otherwise, uncorrected changes in sensitivity are interpreted as changes of the aerosol light absorption. Small changes in lasing mode or beam shape in either laser can alter the sensitivity of the measurement enough to significantly affect measurement accuracy.

It is therefore the objective of the present invention to provide a PTI system that is of simpler construction and is able to maintain alignment and calibration.

This objective is achieved according to the present invention by a single-beam photothermal interferometer for in-situ measurements of light absorption by a light absorbing trace substance load in a fluid, comprising:

a) a laser source emitting a laser beam; said laser source further being enabled to operate in a modulated mode between two intensity levels;
b) a measurement chamber and a reference light path; said reference light path preferably including at least one reference chamber;
c) a number of focussing and/or reflection elements for the laser beam enabling to split the laser beam into a first beam part and a second beam part and to guide the first beam part through the measurement path and the second beam part along the reference light path;
d) a number of pump and/or filter modules being enabled to flood the measurement path with a first fluid and optionally the at reference light path with a second fluid;
e) a detector comprising at least one detector module to measure the intensity of the first and the second beam part after the measurement path and the reference light path respectively; and
f) an evaluation unit being enabled to determine after interferometric recombination the phase shift among the detected intensities of the first beam part and the second beam part.

Thus, this setup provides a simple photothermal interferometer in terms of its calibration and its alignment. The single laser solution also contributes positively to the number of parts that have to be used with the result of a simplified setup and alignment of the interferometer. Here, it is worth to be mentioned that the modulation of the laser beam can be achieved either by controlling the laser itself or by controlling the beam by an external device, such as a chopper or acousto-optical modulator or the like.

Preferred embodiments of the present invention are provided in the attached dependent claims 2 to 11.

For the accuracy of the measurements, it is advantageous when said laser beam is emitted at a determined wavelength, a determined intensity and a determined beam width.

Calibration is an important topic with respect to the accuracy of the measurement results. Therefore, a preferred embodiment of the present invention provides for the interferometer where during a calibration phase the pump and/or filter modules are controllable to flood the measurement path, preferably a measurement chamber, with a calibration fluid of known content and to flood the reference light path, preferably at least one reference chamber, with a reference fluid of known content.

For precise measurements, the interferometer can be designed that during a measurement phase the pump and/or filter modules are controllable to flood the measurement path with a probe fluid being loaded with the light absorbing trace substance load and to flood the at least one reference path with the probe fluid being filtered before entering into the at least one reference path.

Advantageously, the measurement path and the at least one reference path can be designed as a measurement chamber and as at least one reference chamber both having the form of longitudinally extending tubes being aligned substantially parallel to each other.

Preferably, a first and a second reference chamber can be provided and wherein some of the number of the focussing and/or reflection elements being enabled to guide the second beam part through the first reference chamber and subsequently through the second reference chamber before arriving at a detector module.

Further, some of the number of pump and/or filter modules can be controlled to guide the filtered probe fluid through the first reference chamber and subsequently through the second reference chamber. In this setup, a design can be provided wherein the second reference chamber also has the form of a longitudinally extending tube being aligned substantially parallel to the measurement chamber and the first reference chamber.

Suitably, the interferometer can be enabled to handle as probe fluid air being loaded with soot particles.

Further, the interferometer can be enabled to handle as probe fluid a liquid being loaded with colloidal particles.

Considering that the interferometer reaches equilibrium with the modulated deposition of energy within a short time, the amount of light absorbed during the heating phase can be inferred from the rate of change of the phase shift during the heating phase and/or the cooling phase. In either method of evaluation the measured phase change $\Delta\varphi$ can be of specific interest. Therefore, as a further preferred embodiment, the interferometer can be designed in a way that its evaluation unit is enabled to determine the phase shift and/or the rate of the phase shift change from the detected intensities of the first and second beam parts during those phases when the modulated laser beam is operated at the higher or the lower intensity level.

Preferred embodiments of the present invention are hereinafter described in more detail with reference to the attached drawings, which depict in:

Figure 1      schematically a physical realisation of the MSPTI prototype;

Figure 2      a detailed view of the interferometer part schematically from Figure 1;

Figure 3      schematically the air flow scheme for calibration (a) and measurement (b);

Figure 4      schematically the PTI signal generation and measurement;

Figure 5      a response of the interferometer during the heating phase for a strongly absorbing aerosol; and

Figure 6      a demonstration of the relative nature of the MSPTI measurement.

The present invention provides a single laser interferometer for the measurement of a light absorbing trace substance load in a fluid, which comprises three main elements: the laser source and optical elements for beam preparation, the interferometer and the detection device. The interferometer element comprises a beam splitter to divide the input laser beam into two part beams, one which traverses the measurement arm of the interferometer and the other the reference arm of the interferometer. The beam parts are reflected and recombined at the beam splitter, leading to interference patterns in the output beams of the interferometer. The single beam transfers energy to the sample within the measurement arm. Modulation of the power of the single laser leads to a modulation of the absorbed light by the sample and a modulation of the interference patterns.

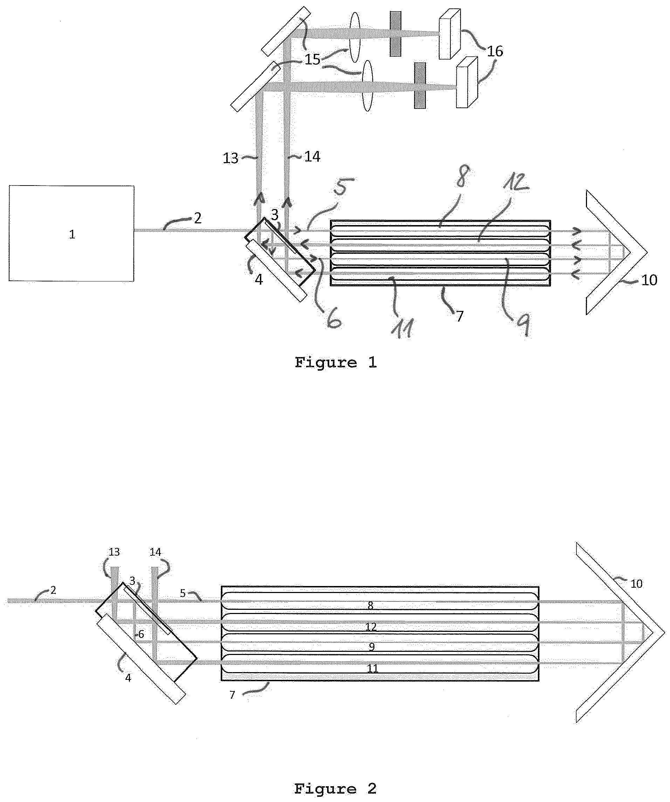

Figure 1 now illustrates the setup of a one laser photothermal interferometer MSPTI comprising a laser source 1 which emits a laser beam 2 of defined wavelength and diameter. The intensity of the laser beam is modulated either by controlling the output of the laser itself or preferentially with an external modulation device (not shown in detail, included in the laser source 1). The laser beam 2 is preferentially shaped using several optical elements (not shown in detail) before entering the interferometer.

A beam splitter 3 splits the incoming laser beam 2 into two beam parts 5, 6. The beam splitter 3 and a mirror 4 are adjusted such that the first beam part 5 passes through a measurement chamber 8 (comprised in a measurement/reference tube set up 7) containing the sample fluid and the second beam part 6 passes through a reference chamber 9 (also comprised in a measurement/reference tube set up 7). Both part beams 5, 6 are incident on a retroreflector 10 which reflects the part beams 5, 6 back through empty chambers 11, 12 so that the beam parts meet at the beam splitter 3. The beam parts 5, 6 are split again, with one part of each beam part combining with another part of the other beam part to form two output beams 13, 14.

The output beams 13, 14 are modified by several optical elements 15 so that they each fall completely onto the active area of a light sensitive detector 16. Technically, it would be only necessary to measure one of the two output beams 13, 14, but it is certainly advantageous to measure the light intensities of both output beams 13, 14.

Preferentially, the pressure of one or both empty chambers 11, 12 can be controlled in order to change the relative optical path length of the so-called measurement arm (beam part 5) of the interferometer with respect to the so-called reference arm (beam part 6). As such the phase of the interferometer and the relative intensities of the output beams 13, 14 can be controlled.

In order to calibrate the interferometer, a preferred embodiment of the present invention can be achieved when during a calibration phase the pump and/or filter modules are controllable to flood the measurement chamber 8 with a calibration fluid of known content and to flood a reference beam path, preferably the at least one reference chamber 9, with a reference fluid of known content.

In order to perform effective (background free) measurement of only the particle load in a fluid, the interferometer is operable during a measurement phase by controlling the pump and/or filter modules to flood the measurement chamber 8 with a probe fluid being loaded with a particle content and to flood the reference chamber 9 with the filtered probe fluid. The output beams of the interferometer therefore deliver the interference response of the probe fluid with and without particle content.

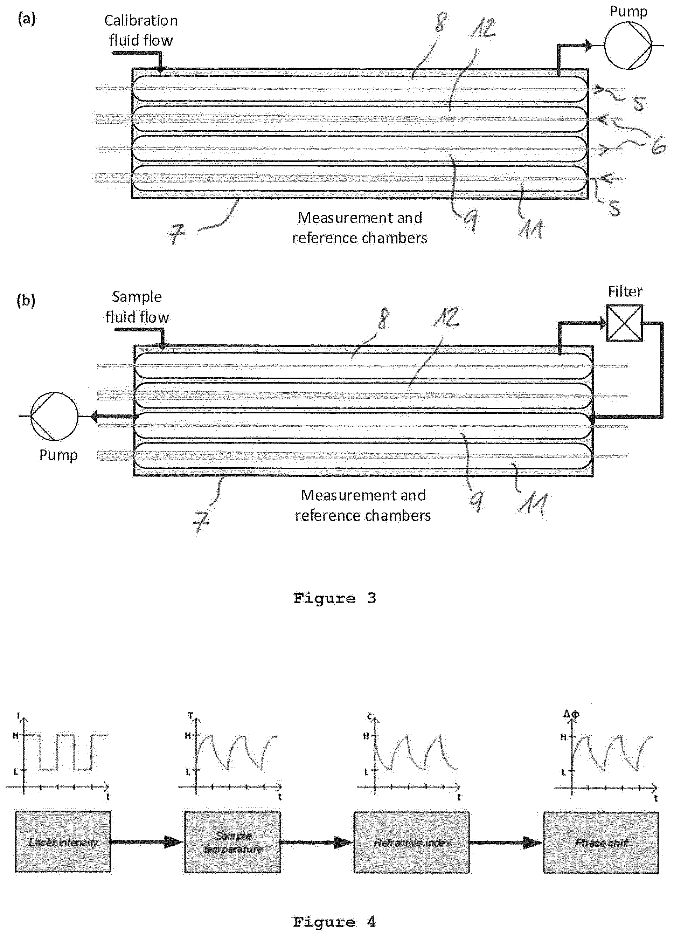

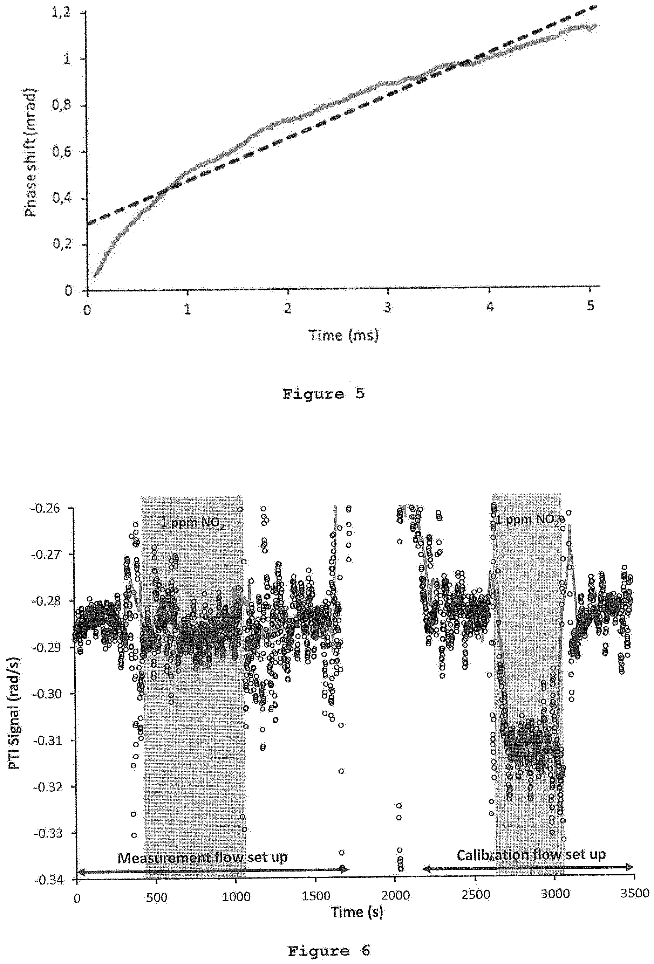

As an example, Figure 3 schematically shows the fluid flow scheme during calibration (a) and measurement (b) with background fluid signal subtraction. To calibrate the instrument, a reference fluid of known absorption is flowed through the measurement chamber 8 only, thus determining the response of the interferometer to this reference fluid. For the measurement of the absorption of the particle fraction of a fluid, the entire sample fluid is flowed through the measurement chamber 8. Following this, the sample fluid is flowed through a filter, removing the particle fraction from the fluid. The remaining fluid is then flowed through the reference chamber 9. As PTI provides a relative measurement of light absorption and the non-particle fraction of the fluid is present in both arms of the interferometer, the absorption of the non-particle fraction is automatically compensated in the measurement. An example of this is shown in Figure 6.

The geometry of the measurement chamber and, if present, the reference chamber are determined by the design of the interferometer. In order to employ a preferred folded interferometer design, the measurement chamber and the reference chamber may have the form of longitudinally extending tubes being aligned substantially parallel to each other.

In order to address the aforementioned difficulties of the PTI technique according to the EP 3 492 905 A1, a new PTI instrument employing a single laser and unique beam configuration has been developed. This instrument greatly simplifies the alignment of the interferometer, maximises the sensitivity of the measurement and enables artefact free measurement of aerosol absorption in the presence of absorbing gaseous species. In the following, the experimental realisation of this instrument is disclosed, which has been termed the modulated single-beam PTI (MSPTI) configuration.

By employing only a single laser, the difficulties faced by standard two laser realisations related to overlapping two laser beams optimally are no longer present. A single beam always has by definition a perfect overlap with itself. In the one-laser photothermal interferometer the single laser beam functions as both pump and probe and is modulated between two intensity levels. The modulation of the beam causes a modulation of the light absorption by the sample, which in turn leads to a modulation in the amount of heat transferred to the sample fluid and a modulation of the refractive index of the sample fluid. The change in refractive index is equivalent to a change of optical path length and thus a phase shift between the beam parts 5 and 6. This change of the phase shift in the sample fluid is measured in the form of a relative intensity change of the output beams, where the phase shift $\Delta\varphi$ can be defined as the normalised difference of the output beam intensities:

$$\Delta\varphi = \frac{I_1 - I_2}{I_1 + I_2} \qquad\qquad (1)$$

The process of signal generation is presented schematically in Figure 4.

As the total light intensity in the interferometer outputs is modulated, standard signal detection schemes cannot be employed. To demodulate the signal the intensity of the detected beams must first be normalised to the total intensity of the laser beam (see Equation 1). Alternatively, the signal can be analysed partwise and the measured light intensity during the high and low modulation phases can be analysed separately. Ignoring losses, the change of the refractive index of the fluid for a sample of constant concentration depends linearly on the energy absorbed by the sample. Therefore, the refractive index increases linearly with time during the high modulation phase (heating phase). The linear relationship breaks down if the modulation frequency is too low, or the sample is not allowed to cool sufficiently between modulation high phases.

Figure 5 shows the change of phase over time during a modulation high phase for a highly concentrated soot sample. Despite the deviation from linearity, here exemplarily a linear fit to the data has been found to directly correspond to the concentration of the sample present. Accordingly, the linear fit is shown by the dashed line aligned with the measurement data.

Measurement of the light absorption by particles separate from light absorption by other (molecular) species is made possible by filtering the sample with an appropriate filter and then passing the resultant fluid without particles through a reference chamber in the other arm of the interferometer. In this way the concentration and thus light absorption of the molecular species is the same in each arm of the interferometer and no difference in absorption and thus no signal is produced. Signal is only produced when a difference in concentration of an absorbing species is present between sample and reference chambers. Therefore, by filtering the particles out of the sample and passing the remaining fluid through the reference chamber, the light absorption of the particles alone can be determined.

Calibration of the PTI measurement is performed by analysing a fluid with a known light absorption coefficient at the measurement wavelength. The calibration is performed by flooding the sample chamber with the calibration fluid and the reference chamber, if present, with a fluid that does not absorb significantly at the measurement wavelength. The measured phase shift is then equated to the known light absorption of the calibration species and a calibration constant is determined. This calibration can then be used to convert the measured quantity to an absorption coefficient, $b_{abs}$.

An active quadrature control element, preferentially a pressure cell, is used to regulate the optical path length of one path of the interferometer. This active regulation is used to hold the interferometer in quadrature whereby the relationship between the measured intensities and the physical phase shift is maximal and linear; Equation 1 is only valid for small $\Delta\varphi$. The PTI signal is typically evaluated by measuring the amplitude of the frequency component at the modulation frequency. This may also be used to evaluate the signal of the single laser PTI after normalisation of instantaneous signal with the instantaneous total laser power. The signal from the single laser PTI can also be evaluated by examining the rate of change of the phase shift during the heating and/or cooling phase.

During the heating phase, the rate of change of the phase shift is directly the change of refractive index in the fluid due to light absorption. During the cooling phase, the rate of change of the phase shift is directly the rate of change of the refractive index due to heat flow out of the laser beam volume. However, as the system reaches equilibrium with the modulated deposition of energy within a short time, the amount of light absorbed during the heating phase can be inferred also from the rate of change of the phase shift during the cooling phase. In either method of evaluation the measured phase change $\Delta\varphi$ can be equated to an absorption coefficient $b_{abs}$ using the relation:

$$\Delta\varphi = \frac{2\pi(n-1)}{\lambda T \rho C_p}\frac{l\Delta P}{A}b_{abs}\Delta t \qquad (2)$$

where n is the real part of the refractive index of the fluid, $\lambda$ the wavelength of the laser beam (pump beam in two laser PTI), $T$, $\rho$ and $C_p$ the temperature, density and heat capacity of the fluid, $l$ the length of the interaction between laser and sample, $\Delta P$ the laser power difference between the high and low modulation phases, $A$ the cross-sectional area of the interaction between laser and sample and $\Delta t$ the duration of the laser high modulation phase.

Figure 6 now shows in further detail a demonstration of the subtraction of the absorption signal (i.e. 1 ppm NO2 gas in air) of a background fluid (pure air) and the absorption signal generated by this fluid. Measurements were done at an absorption wavelength of 532 nm.

**Claims**

1. A single-beam photothermal interferometer for in-situ measurements of light absorption by a light absorbing trace substance load in a fluid, comprising:

    a) a laser source emitting a laser beam; said laser source further being enabled to operate in a modulated mode between two intensity levels;

b) a measurement chamber and a reference light path; said reference light path preferably including at least one reference chamber;

c) a number of focussing and/or reflection elements for the laser beam enabling to split the laser beam into a first beam part and a second beam part and to guide the first beam part through the measurement path and the second beam part along the reference light path;

d) a number of pump and/or filter modules being enabled to flood the measurement path with a first fluid and optionally the at reference light path with a second fluid;

e) a detector comprising at least one detector module to measure the intensity of the first and the second beam part after the measurement path and the reference light path respectively; and

f) an evaluation unit being enabled to determine after interferometric recombination the phase shift among the detected intensities of the first beam part and the second beam part.

2. The interferometer according to claim 1, wherein said laser beam is emitted at a determined wavelength, a determined intensity and a determined beam width.

3. The interferometer according to claim 1 or 2, wherein during a calibration phase the pump and/or filter modules are controllable to flood the measurement path, preferably a measurement chamber, with a calibration fluid of known content and to flood the reference light path, preferably at least one reference chamber, with a reference fluid of known content.

4. The interferometer according to any of the preceding claims, wherein during a measurement phase the pump and/or filter modules are controllable to flood the measurement path with a probe fluid being loaded with the light absorbing trace substance load and to flood the at least one reference chamber with the probe fluid being filtered before entering into the at least one reference chamber.

5. The interferometer according to any of the preceding claims, wherein the measurement chamber and the at least one reference chamber have the form of longitudinally extending tubes being aligned substantially parallel to each other.

6. The interferometer according to any of the preceding claims, wherein first and a second reference chamber is provided and wherein some of the number of the focussing and/or reflection elements being enabled to guide the second beam part through the first reference chamber and subsequently through the second reference chamber before arriving at a detector module.

7. The interferometer according to claim 6, wherein some of the number of pump and/or filter modules being enabled to guide the filtered probe fluid through the first reference chamber and subsequently through the second reference chamber.

8. The interferometer according to claim 6 or 7, wherein the second reference chamber also has the form of a longitudinally extending tube being aligned substantially parallel to the measurement chamber and the first reference chamber.

9. The interferometer according to any of the preceding claims, wherein the probe fluid is air loaded with soot particles.

10. The interferometer according to any the preceding claims 1 to 8 wherein the probe fluid is a liquid loaded with colloidal particles.

11. The interferometer according to any of the preceding claims, wherein the evaluation unit is enabled to determine the phase shift and/or the rate of the phase shift change from the detected intensities of the first and second beam parts during those phases when the modulated laser beam is operated at the higher or the lower intensity level.

Figure 1

Figure 2

(a)

Calibration
fluid flow

Pump

Measurement and
reference chambers

(b)

Sample
fluid flow

Filter

Pump

Measurement and
reference chambers

**Figure 3**

Laser intensity → Sample temperature → Refractive index → Phase shift

**Figure 4**

Figure 5

Figure 6

Europäisches
Patentamt

European
Patent Office

Office européen
des brevets

# EUROPEAN SEARCH REPORT

Application Number

EP 20 16 4895

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 680 963 A (EDWARDS LOUIS J ET AL) 1 August 1972 (1972-08-01) | 1-5,9-11 | INV. G01N21/45 G01N21/17 |
| Y | * column 2, line 11 - line 27 * * column 2, line 51 - column 3, line 15 * * column 3, line 36 - column 4, line 4 * * column 5, line 57 - line 60 * * figures 1,2 * | 6,7 | |
| X | OWENS M A ET AL: "A PHOTOTHERMAL INTERFEROMETER FOR GAS-PHASE AMMONIA DETECTION", ANALYTICAL CHEMISTRY, AMERICAN CHEMICAL SOCIETY, US, vol. 71, no. 7, 1999, pages 1391-1399, XP000825721, ISSN: 0003-2700, DOI: 10.1021/AC980810H * title * * abstract * * page 1392, right-hand column, line 36 - line 38 * * figure 1 * | 1-4,9-11 | |

-----

-----

-/--

TECHNICAL FIELDS
SEARCHED      (IPC)

G01N

The present search report has been drawn up for all claims

| Place of search | Date of completion of the search | Examiner |
|---|---|---|
| Munich | 13 August 2020 | Witte, Thomas |

EPO FORM 1503 03.82 (P04C01)

page 1 of 2

Europäisches
Patentamt

European
Patent Office

Office européen
des brevets

## EUROPEAN SEARCH REPORT

Application Number

EP 20 16 4895

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIN HAO ET AL: "Analysis and design of an improved light interference methane sensor", 11TH IEEE INTERNATIONAL CONFERENCE ON CONTROL & AUTOMATION (ICCA), IEEE, 18 June 2014 (2014-06-18), pages 404-409, XP032636532, DOI: 10.1109/ICCA.2014.6870954 [retrieved on 2014-08-04] | 1-11 | |
| Y | * title * * page 404, right-hand column, line 18 - line 19 * * page 405, left-hand column, line 4 - line 9 * * page 405, left-hand column, line 27 - page 406, left-hand column, line 28 * * equ. 1 * * figures 1,2,3 * ----- | 6,7 | |
| A | JP S58 88640 A (JAPAN SPECTROSCOPIC CO) 26 May 1983 (1983-05-26) * abstract * * figure 1 * ----- | 1-11 | TECHNICAL FIELDS SEARCHED (IPC) |

The present search report has been drawn up for all claims

| Place of search | Date of completion of the search | Examiner |
|---|---|---|
| Munich | 13 August 2020 | Witte, Thomas |

page 2 of 2

## ANNEX TO THE EUROPEAN SEARCH REPORT
## ON EUROPEAN PATENT APPLICATION NO.

EP 20 16 4895

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2020

| Patent document cited in search report | | Publication date | Patent family member(s) | Publication date |
|---|---|---|---|---|
| US 3680963 | A | 01-08-1972 | NONE | |
| JP S5888640 | A | 26-05-1983 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3492905 A1